# EUROPEAN PATENT APPLICATION

(11) **EP 1 352 803 A1**
(43) Date of publication of application: **15.10.2003**
(21) Application number: 02076406.4
(22) Date of filing: 08.04.2002
(51) Int. Cl.: B62B 7/08

(54) **Collapasible baby buggy**

(30) Priority: 08.04.2002 NL 1017805
(71) Applicant: All Our Kids Europe B.V., 6224 LJ Maastricht (NL)
(72) Inventor: Bost, Bart Willem Jozef, 6221 EW MAASTRICHT (NL)
(74) Representative: Voncken, Bartholomeus Maria Christiaan

(57) **Abstract**

There is disclosed a collapsible baby buggy comprising at least one front wheel and the rear wheels, wherein the front wheel and the rear wheels are pivotally connected to a central frame member, in such a manner that they are movable between an operative position, in which the wheels are positioned lower than the central frame member, the front wheel is disposed some distance ahead of the rear wheels and the rear wheels are spaced apart a predetermined lateral distance, and a transport position, in which the wheels are positioned above the central frame member, the distance between the front wheel and the rear wheels has been reduced and the lateral distance between the rear wheels has been reduced.

## Description

The invention relates to a collapsible baby buggy comprising at least one front wheel and two rear wheels.

In view of the baby's safety, a baby buggy must have a stable position. In practice this means that the distance between said at least one front wheel and the rear wheels, the so-called wheel base, must be sufficiently large, whilst also the lateral distance between the rear wheels (and possibly, if two front wheels are used, the lateral distance between the front wheels), the so-called track, must be sufficiently large. A drawback of this arrangement, however, is the fact that the buggy will have substantial dimensions, which render transport of the baby buggy (for example in a car or by plane) rather awkward.

Consequently, collapsible baby buggies have been developed which obviate this drawback at least in part. Generally, known collapsible baby buggies have a construction in which either the wheel base or the track is reduced upon collapsing of the baby buggy. One of said two quantities generally retains its original value, however, so that a reduction of the dimensions in one direction of the buggy is realised indeed, but the other dimensions remain unchanged, so that also these known collapsible baby buggies still take up a considerable amount of space in the collapsed position.

The object of the present invention is to provide an improved collapsible baby buggy, in which the aforesaid drawback is eliminated in a simple yet efficient manner.

In order to accomplish that objective, the collapsible baby buggy of the type referred to in the introduction according to the invention is characterised in that the front wheel and the rear wheels are pivotally connected to a central frame member, in such a manner that they are movable between an operative position, in which the wheels are positioned lower than the central frame member, the front wheel is disposed some distance ahead of the rear wheels and the rear wheels are spaced apart a predetermined lateral distance, and a transport position, in which the wheels are positioned above the central frame member, the distance between the front wheel and the rear wheels has been reduced and the lateral distance between the rear wheels has been reduced.

Upon collapsing of the baby buggy according to the invention, the mutual distance between said at least one front wheel and the rear wheels as well as the lateral distance between the rear wheels is reduced. As a result, a compact unit having minimum dimensions is obtained, which thus takes up little space. This enables easy storage of the baby buggy in its transport position in the boot of a car or in the hand-luggage compartment of an aeroplane.

In principle, a dual movement takes place upon collapsing of the baby buggy from the operative position to the transport position, viz. a movement (eventually) towards each other of said at least one front wheel and the rear wheels and the movement towards each other of the rear wheels.

Constructionally it is preferred within this scope for said at least one front wheel to be mounted on a front fork which pivots about a transverse axis arranged on the central frame, whilst the rear wheels are mounted on a rear fork, which likewise pivots about a transverse axis arranged on the central frame, in which the rear wheels are furthermore movably connected to the rear fork so as to be able to change the lateral spacing between them. It should be noted within this scope that the transverse axis about which the front fork pivots and the transverse axis about which the rear fork pivots may or may not be one and the same transverse axis.

In order to effect the pivoting movement of the front fork and the rear fork with respect to the central frame, a special embodiment of the baby buggy according to the invention is proposed according to which the central frame is provided with an operating part which is capable of movement in either direction with respect to the frame, which operating part is connected to the front fork and the rear fork by means of coupling arms, in such a manner that movement of the operating part with respect to the central frame part causes the front fork and the rear fork to pivot about their respective transverse axes. The operating part can be moved in either direction by a user of the baby buggy, so that a movement of the baby buggy from the operative position to the transport position, or vice versa, can take place automatically.

When such an operating part capable of movement in either direction with respect to the central frame is used, it is especially preferred for said operating part to be movable substantially in vertical direction and to include a handle for the baby buggy, wherein movement of the handle in downward direction causes the baby buggy to move from the operative position to the transport position and wherein movement of the handle in upward direction causes the baby buggy to move from the transport position to the operative position.

When the baby buggy is to be moved from the operative position to the transport position, a downward force is exerted on the operating part by means of the handle. This causes the operating part to move down with respect to the central frame part, and the front fork and the rear fork will pivot about their respective transverse axes.

This pivoting movement of the front fork and the rear fork is aided by the weight of the baby buggy, "whose legs give way", as it were in that case. The central frame part finally reaches the floor, after which further movement of the operating part causes the front fork and the rear fork and the associated wheels to pivot further in upward direction. Finally, the front fork and the rear fork reach their end positions, in which the wheels are positioned above the central frame part, closely together. In the reverse situation, when the baby buggy is to be moved from the transport position to the operative position, the collapsed baby buggy can be lifted by means of the handle. As a result, an upward force will be exerted on the operating part, causing said operating part to move upward with respect to the central frame part. This movement is aided by the weight of the front fork and the rear fork and their associated wheels, causing them to pivot downwards about their respective transverse axes to the position they occupy in the operative position of the baby buggy.

Furthermore, the handle may be movable to a limited extent with respect to the operating part in the direction of movement thereof. The handle can thus make a limited free stroke, which can be utilised for minimising the dimensions of the handle in the transport position of the baby buggy.

As already said before, in addition to the pivoting movement of the front fork and the rear fork about their respective transverse axes, a movement of the rear wheels towards each other or away from each other takes place. In a special embodiment of the baby buggy according to the invention, such a movement can be effected in that the rear wheels are also pivotable between their operative position and their transport position with respect to the rear fork about suitably oriented auxiliary axes. Such auxiliary axes may lie in a plane parallel to a longitudinal median plane of the baby buggy, for example.

In order to effect the collapsing movement (and the movement in reverse direction) of the baby buggy in a simple manner, the pivoting movement of the rear wheels is preferably mechanically coupled with the pivoting movement of the rear fork with respect to the central frame part.

Such a mechanical coupling can be carried out in various ways. A possible variant is one in which each rear wheel is mounted on a carrier which is pivotable about the aforesaid auxiliary axes and which is connected to the central frame part by means of a cable or the like. The connection with the central frame part is such that the distance between the connecting point between the cable and the central frame part on the one hand and the connecting point between the cable and the aforesaid carrier on the other and changes upon pivoting movement of the rear fork, so that the pivoting movement of the carrier (and consequently of the wheel mounted thereon) takes place out of necessity. In this scope, the carrier or the cable may also be spring-loaded in the direction of one of its uttermost positions.

In order to lock the baby buggy in the operative position and the transport position in a reliable manner, suitable locking means to be deactivated as desired may be used for locking various parts of the baby buggy in the operative position or in the transport position, as the case may be. Activation of said locking means may take place automatically by snapping, for example, whilst deactivation may be carried out by operating means (for example an operating knob mounted on the handle).

Finally, a variant of an embodiment of the baby buggy according to the invention is mentioned which is characterised by a seat which is detachably connected to the central frame. Said seat may also be used for other purposes in that case, for example on a loose chassis or the like. When the seat is mounted on the central frame part, it will not interfere with the movement of the baby buggy to the transport position.

The invention will now be explained in more detail with reference to the drawing, which shows an embodiment of the baby buggy according to the invention.
Fig. 1 is a schematic, perspective view of an embodiment of the collapsible baby buggy according to the invention in an operative position thereof;
Fig. 2 is a (likewise schematic) side elevation associated with Fig. 1;
Fig. 3 is a side elevation of the baby buggy, which shows a first phase of the movement towards the transport position thereof;
Fig. 4 shows the next phase;
Fig. 5 shows the phase shortly before the transport position is reached;
Fig. 6 shows the phase in which the transport position has been reached;
Fig. 7 is a schematic, perspective view associated with Fig. 6 of a part of the baby buggy according to the invention; and
Fig. 8 schematically shows the operating principle of an embodiment of a mechanism for pivoting the rear wheels of the baby buggy according to the invention.

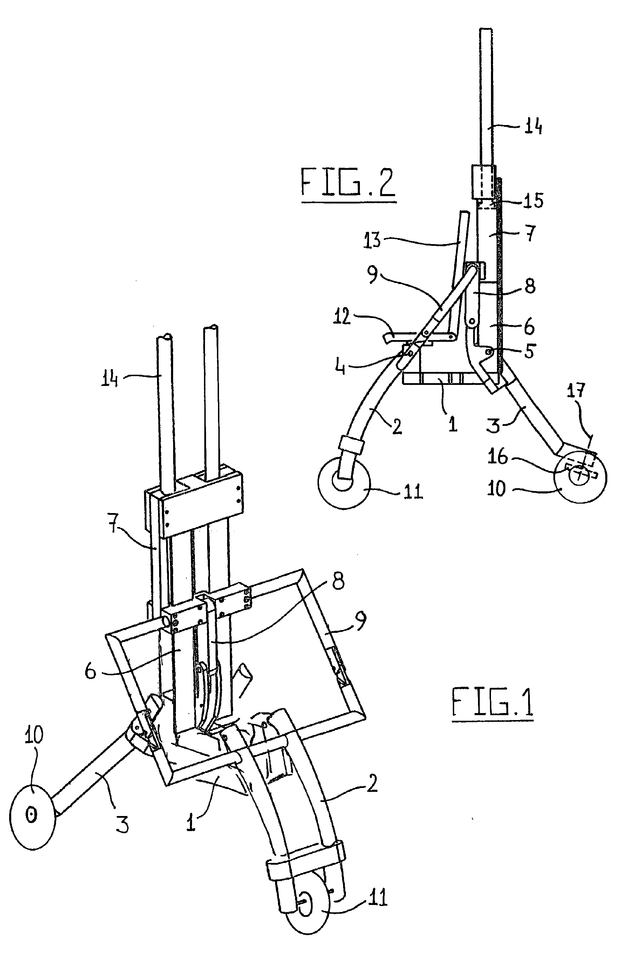

In Fig. 1, a perspective view of an embodiment of the collapsible baby buggy according to the invention is shown, from which, however, a seat (which is shown in Fig. 2) has been left out for the sake of clarity. In the first place, said baby buggy comprises a central frame part 1, at the front side of which a front fork 2 is pivotably mounted and at the rear side of which a rear fork 3 is pivotably mounted. The front fork 2 pivots about a transverse axis 4, which is shown in Fig. 2, whilst the rear fork 3 pivots about a transverse axis 5 which is likewise shown in Fig. 2.

The central frame part 1 comprises a vertical part 6, along which an operating part 7 can move in either direction. The operating part 7 is coupled to the rear of fork 3 by means of a central coupling arm 8, whilst a U-shaped coupling frame 9 provides a connection with the front fork 2. The connection between the central coupling arm 8 and the rear fork 3 takes place at an end of the rear fork 3 which is disposed at the side of the transverse axis 5 opposite the end of the rear fork 3 that carries the rear wheels 10. In a comparable manner, one end of the front fork 2 carries a front wheel 11, whilst an end of the front fork 2 positioned at the other side of the transverse axis 4 is connected to the U-shaped coupling frame 9. The connection between the coupling part 8 and, respectively, the rear fork 3 and the operating part 7 on the one hand and between the U-shaped coupling frame 9 and, respectively, the front fork 2 and the operating part 7 on the other hand consists of pivot points.

Figure 2 furthermore shows a seat 12, which may be provided with a back part 13 which can pivot with respect thereto and which can be detached from the central frame part 1. The seat 12 may also be capable of a pivoting movement with respect to the central frame part 1.

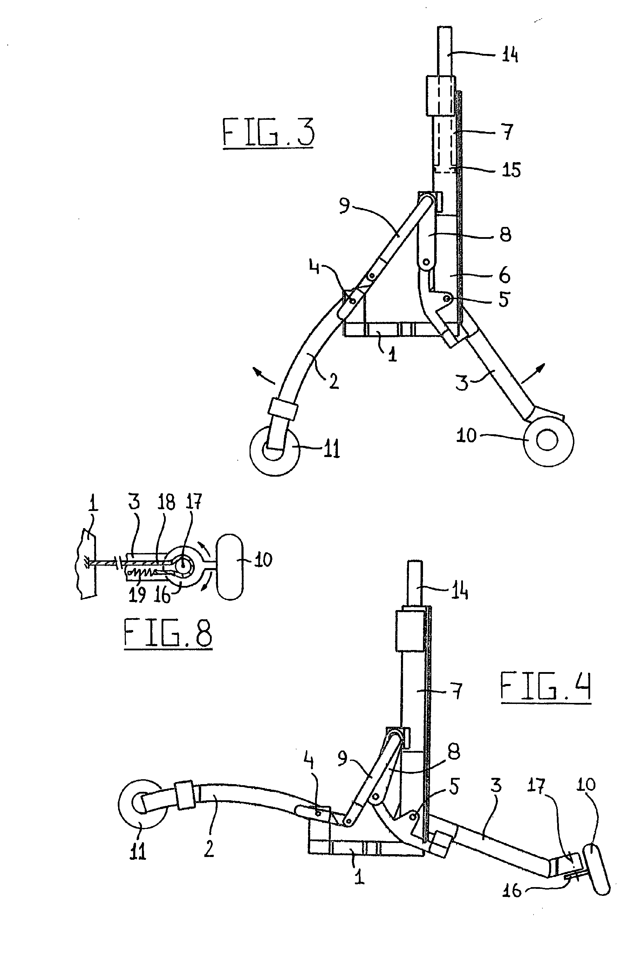

A handle 14 engages the operating part 7. At the bottom side, said handle 14 is provided with a stop 15, which limits the movement of the handle 14 with respect to the operating part between an upper position as shown in Fig. 2 and a lower position as shown in Fig. 3.

Each of the rear wheels 10 of the illustrated baby buggy is carried by a carrier 16 (only schematically indicated, see Fig. 2 and Fig. 4, respectively) which, in the illustrated embodiment, is pivotable about an auxiliary axis 17 that lies in a longitudinal plane of the baby buggy.

The operation of the illustrated baby buggy is as follows. In Fig. 2, the baby buggy is in its operative position, that is, a position in which the front wheel 11 and the rear wheels 10 are positioned lower than the central frame part 1 and the seat 12 is accessible to a child. The baby buggy can be moved by means of the handle 14. The handle 14 can be locked in the upper position that is shown in Fig. 2 by locking means (not shown) that can be deactivated as desired.

When the baby buggy is to be collapsed, the handle 14 is first moved downwards to the position that is shown in Fig. 3. This causes the stop 15 to move with respect to the operating part 7. After the handle 14 has reached the lower position that is shown in Fig. 3, the handle 14 will exert a downward force on the operating part 7 via its stop 15, as a result of which said operating part will move downwards with respect to the central frame part 1 (or, put more precisely, the vertical part 6 thereof). As a result, a moment is exerted on the rear fork 3 and the front fork 2 via the central coupling arm 8 and the coupling frame 9, respectively, as a result of which said forks will pivot about their transverse axes 4 and 5, as is indicated by the arrows.

It is noted that suitable locking means need to be deactivated prior to such pivoting of the forks 2, 3. This may take place, for example, by means of operating elements arranged on the handle 14.

Said pivoting movement of the front fork 2 and the rear fork 3 is aided by the weight of the baby buggy, since the central frame part 1 tends to move down with respect to the wheels 10 and 11 after said locking means have been deactivated.

For the sake of clarity, the seat 12 is not shown in Figs. 3 - 7.

Referring to Fig. 4, a position of the baby buggy is shown in which the front fork 2 and the rear fork 3 have already pivoted some distance about their transverse axes 4 and 5. The operating part 7 has moved down some distance with respect to the central frame part 1 (part 6).

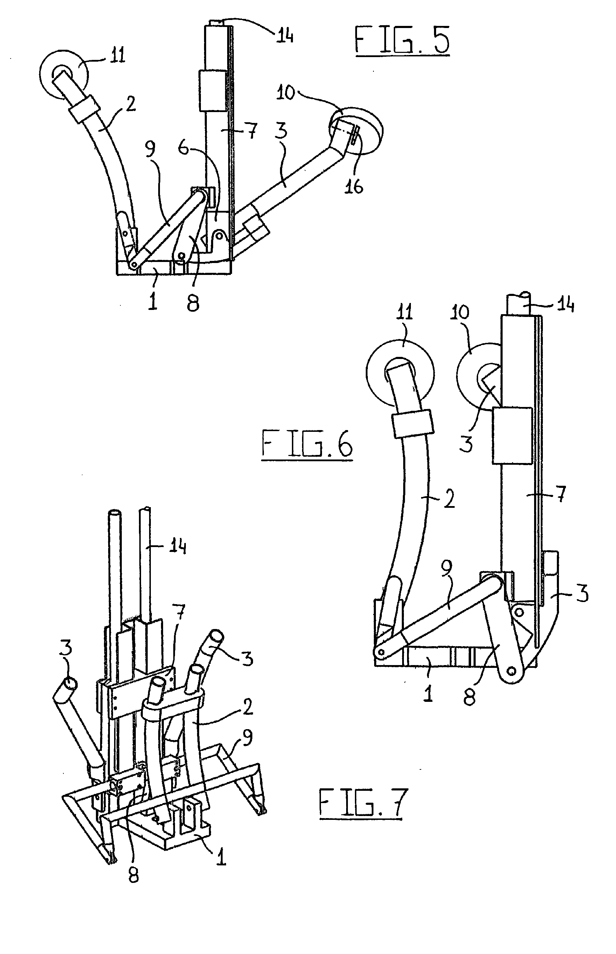

A mechanical coupling is present between the carrier 16 of each of the rear wheels 10 and the central frame part 1, which coupling ensures that when the rear fork 3 pivots with respect to the central frame part 1, the carrier 16 will simultaneously pivot about the auxiliary axis 17 with respect to the rear fork 3. In Fig. 4, this pivoting movement has already taken place in part. Whilst the rear wheels 10 are positioned outside the rear fork 3 in the operative position, the rear wheels 10 will be positioned within the rear fork 3 in the transport position that is inter alia shown in Fig. 6. As a result, a compact position of the rear wheels 10 is obtained. Said mechanical coupling will be discussed in more detail hereinafter with reference to Fig. 8.

Figure 5 shows a next phase of the movement of the baby buggy from the operative position to the transport position. The front fork 2 and the rear fork 3 have now pivoted so far that the front wheel 11 and the rear wheels 10 are already positioned higher than the central frame part 1, which thus rests on the floor in this position. The operating part 7 has moved even further downwards with respect to the vertical part 6 of the central frame part 1. The rear wheels 10 have pivoted further about their auxiliary axes 17.

Starting from the position that is shown in Fig. 4, it would also be possible to tilt the baby buggy forward, so that the front fork 2 with the front wheel(s) 11 remains supported on the floor, thus facilitating the pivoting thereof. This has no effect on the movement of the various parts relative to each other, however.

Figure 6 finally shows the transport position of the baby buggy. The front fork 2 and the rear fork 3 have reached their associated end position. The front wheel 11 and the rear wheels 10 are positioned close together, whilst the rear wheels 10 have furthermore pivoted about their auxiliary axes 17 to a position in which they are present in between the legs of the rear fork 3. It would also be possible to select the relative dimensions and configurations such that the front wheel 11 is present in between the rear wheels 10 in the transport position.

The operating part 7 has reached its lower position relative to the central frame part 1. Also in this position locking means may ensure that the position that has been reached is retained.

The transport position that is shown in Fig. 6 is shown again in perspective view in Fig. 7. The rear wheels 10 and the front wheel 11 have been left out for the sake of clarity.

Finally, reference is made to Fig. 8. The view according to Fig. 8, which substantially corresponds to a bottom plan view of Fig. 3, shows a part of the leg of the rear fork 3 to which the carrier 16 that carries the rear wheels 10 in question is pivotally connected about the auxiliary axis 17. A cable 18 is partially wound round the carrier 16 and is connected thereto. One end of the cable 18 is fixedly connected to the (schematically indicated) central frame part 1, whilst the other part is connected to the rear fork 3 by means of a tension spring 19. The distance between the central frame part 1 and the carrier 16 changes during pivoting movement of the rear fork 3 with respect to the central frame part, so that the cable 18 winds onto the carrier 16 or unwinds therefrom, as the case may be, thus causing the carrier 16 (and consequently also the rear wheel 10) to pivot about the auxiliary axis 17. This pivoting movement is schematically indicated by arrows.

The invention is not limited to the embodiments as described above, which can be varied in many ways within the scope of the invention as defined in the claims. Thus, the baby buggy may have a number of front wheels 11 instead of one. Furthermore, the terms front wheels and rear wheels must not be construed as being limitative; they may be interchanged. In addition to that, various parts, for example the front fork 2, may be telescopic in a manner which is known per se.

## Claims

1. A collapsible baby buggy comprising at least one front wheel and two rear wheels, **characterised in that** the front wheel and the rear wheels are pivotally connected to a central frame member, in such a manner that they are movable between an operative position, in which the wheels are positioned lower than the central frame member, the front wheel is disposed some distance ahead of the rear wheels and the rear wheels are spaced apart a predetermined lateral distance, and a transport position, in which the wheels are positioned above the central frame member, the distance between the front wheel and the rear wheels has been reduced and the lateral distance between the rear wheels has been reduced.

2. A baby buggy according to claim 1, **characterised in that** said at least one front wheel is mounted on a front fork which pivots about a transverse axis arranged on the central frame, whilst the rear wheels are mounted on a rear fork, which likewise pivots about a transverse axis arranged on the central frame, in which the rear wheels are furthermore movably connected to the rear fork so as to be able to change the lateral spacing between them.

3. A baby buggy according to claim 2, **characterised in that** the central frame is provided with an operating part which is capable of movement in either direction with respect to the frame, which operating part is connected to the front fork and the rear fork by means of coupling arms, in such a manner that movement of the operating part with respect to the central frame part causes the front fork and the rear fork to pivot about their respective transverse axes.

4. A baby buggy according to claim 3, **characterised in that** said operating part is movable substantially in vertical direction and includes a handle for the baby buggy, wherein movement of the handle in downward direction causes the baby buggy to move from the operative position to the transport position and wherein movement of the handle in upward direction causes the baby buggy to move from the transport position to the operative position.

5. A baby buggy according to claim 4, **characterised in that** the handle is movable to a limited extent with respect to the operating part in the direction of movement thereof.

6. A baby buggy according to any one of the claims 2-5, **characterised in that** the rear wheels are also pivotable between their operative position and their transport position with respect to the rear fork about suitably oriented auxiliary axes.

7. A baby buggy according to claim 6, **characterised in that** the pivoting movement of the rear wheels is mechanically coupled with the pivoting movement of the rear fork with respect to the central frame part.

8. A baby buggy according to claim 7, **characterised in that** each rear wheel is mounted on a carrier which is pivotable about the aforesaid auxiliary axes and which is connected to the central frame part by means of a cable or the like.

9. A baby buggy according to any one of the preceding claims, **characterised by** suitable locking means to be deactivated as desired for locking various parts of the baby buggy in the operative position or in the transport position, as the case may be.

10. A baby buggy according to any one of the preceding claims, **characterised by** a seat which is detachably connected to the central frame part.
